# EUROPEAN PATENT SPECIFICATION

(11) **EP 4 574 571 B1**
(45) Date of publication and mention of the grant of the patent: **06.05.2026**
(21) Application number: 23219620.4
(22) Date of filing: 22.12.2023
(51) Int. Cl.: B60Q 1/26, B60Q 1/28, B60R 19/52, F21S 43/14, F21S 43/20, F21S 43/27, B60Q 1/00, F21W 104/00

(54) **ILLUMINATED GRILLE FOR A VEHICLE AND RELATED VEHICLE**
BELEUCHTETES GITTER FÜR EIN FAHRZEUG UND ZUGEHÖRIGES FAHRZEUG
GRILLE ÉCLAIRÉE POUR VÉHICULE ET VÉHICULE ASSOCIÉ

(43) Date of publication of application: 25.06.2025
(73) Proprietor: Marelli Automotive Lighting Italy S.p.A., 10078 Venaria Reale (TO) (IT)
(72) Inventor: STAWINOGA, Marcin, 41-200 SOSNOWIEC (PL); OSADNIK, Adam, 41-200 SOSNOWIEC (PL)
(74) Representative: Mitola, Marco

(56) References cited:
- EP-A1- 3 138 734
- WO-A1-2020/006015
- CN-A- 112 124 239
- CN-U- 207 599 577
- DE-A1- 102009 024 783
- KR-A- 20230 099 339
- US-A1- 2021 023 982

## Description

### FIELD OF APPLICATION

The present invention relates to an illuminated grille for a vehicle and to the related vehicle comprising said illuminated grille.

### BACKGROUND ART

Vehicles, and in particular motor vehicles, are commonly provided with grilles, usually arranged at the front, between the headlights, concealing the presence of a radiator of the vehicle engine and which are often used to support the number plate and/or the brand name of the vehicle manufacturer.

The grilles are perforated to allow air to pass so that it can carry out the heat exchange with the radiator crossed by the cooling liquid of the vehicle engine.

In order to maximize said heat exchange, the grille must be as open as possible and have a thin structure.

In recent years, the need is increasingly felt to provide front grilles of motor vehicles not only having a technical function, but also an aesthetic function.

In fact, front grilles have a significant impact on the front of the motor vehicle.

Therefore, it is known to provide front grilles with lighting means mainly for aesthetic purposes.

However, such known solutions are not free from drawbacks and limitations.

In fact, as seen, the grilles must be as open as possible or perforated, thus provided with wide windows for the passage of air, and at the same time, they must have a thin frame.

This means that there is little space available for fixing and/or housing lighting means, which must obviously be concealed from outside observers when not activated. It results that the solutions of the prior art do not allow particular grille customizations and/or lightings and are also very costly to manufacture. Solutions according to prior art are disclosed by CN 112124239 A and WO 2020/006015 A1.

### OVERVIEW OF THE INVENTION

The need is thus felt to solve the drawbacks and limitations mentioned with reference to the prior art.

Such a need is met by an illuminated grille according to claim 1 and a vehicle according to claim 21.

### DESCRIPTION OF THE DRAWINGS

Further features and advantages of the present invention will become more comprehensible from the following description of preferred, non-limiting embodiments thereof, in which:

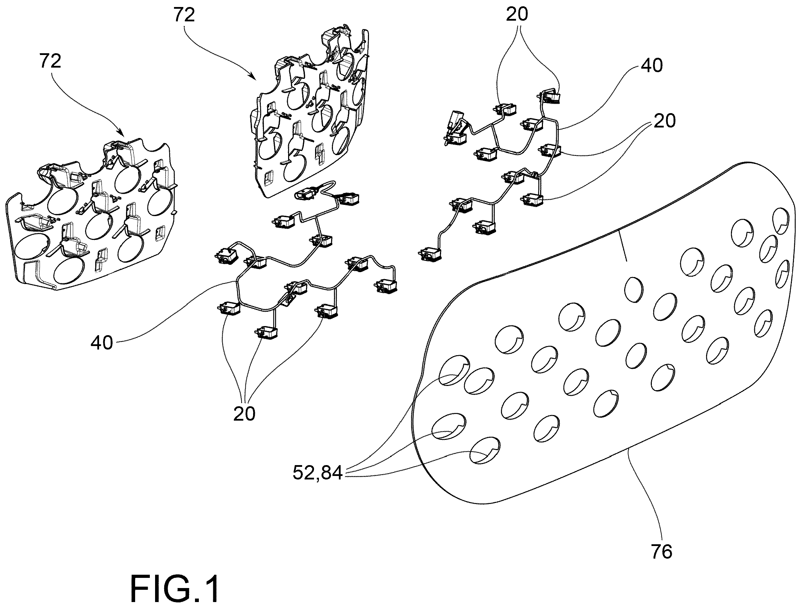

Figure 1 shows a perspective diagrammatic view, in an exploded configuration, of an illuminated grille according to a possible embodiment of the present invention;

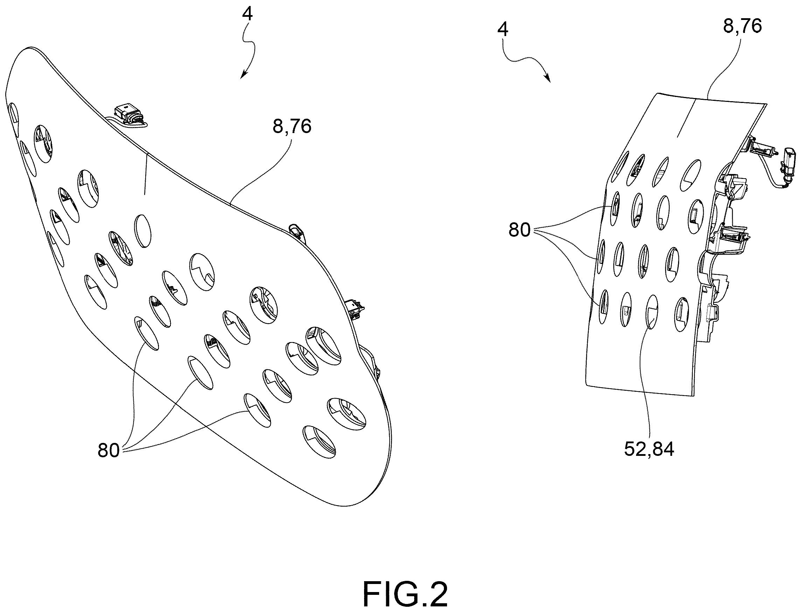

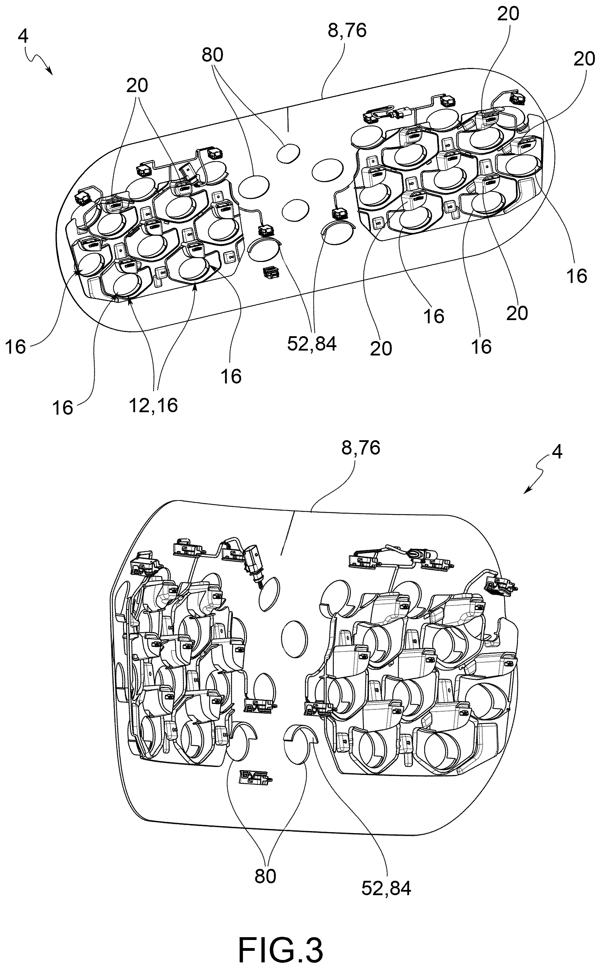

figures 2-3 show perspective views, from different angles and in an assembled configuration, of the illuminated grille in figure 1;

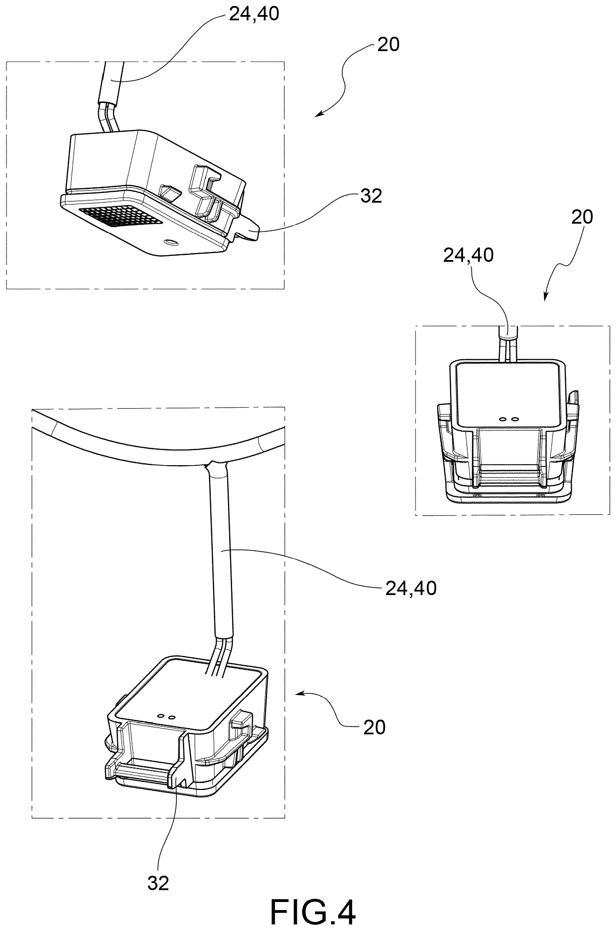

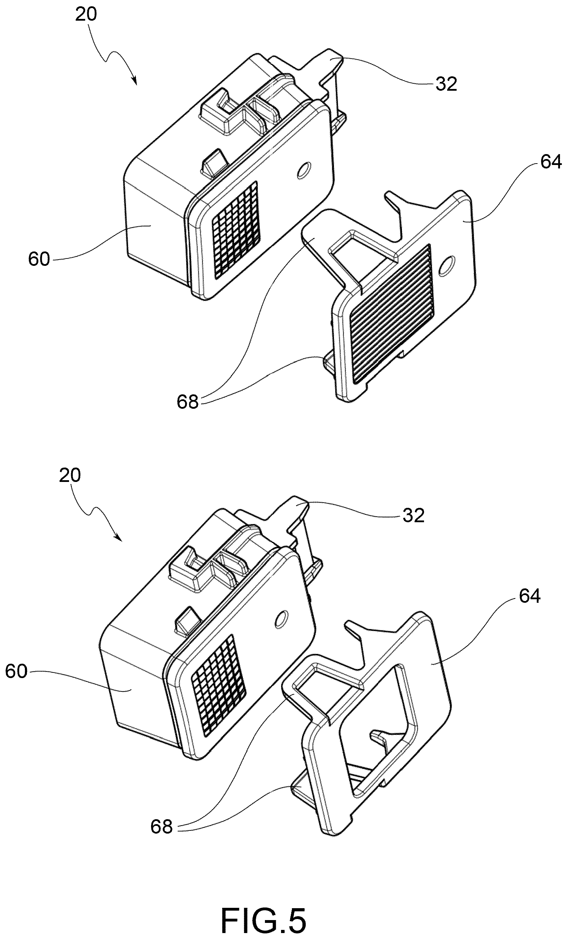

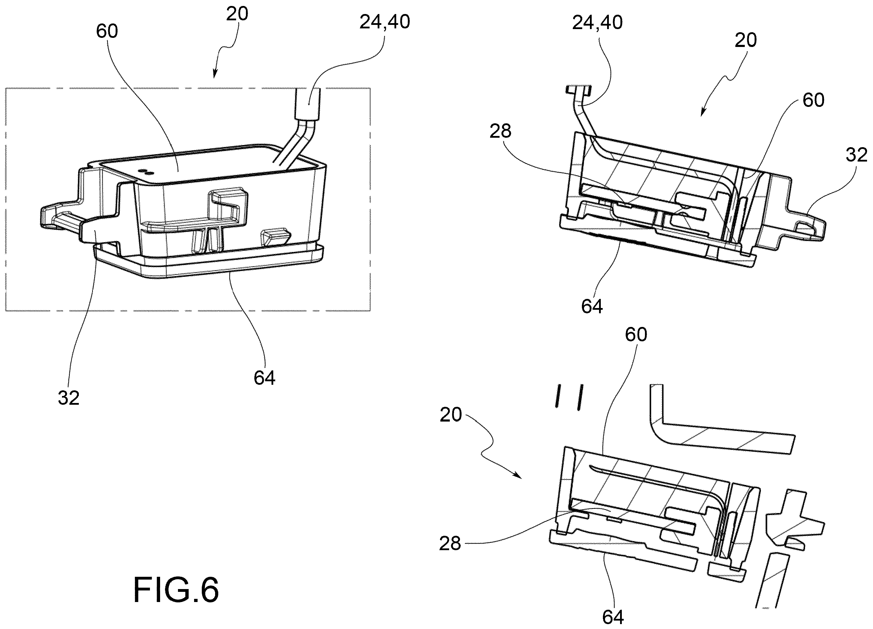

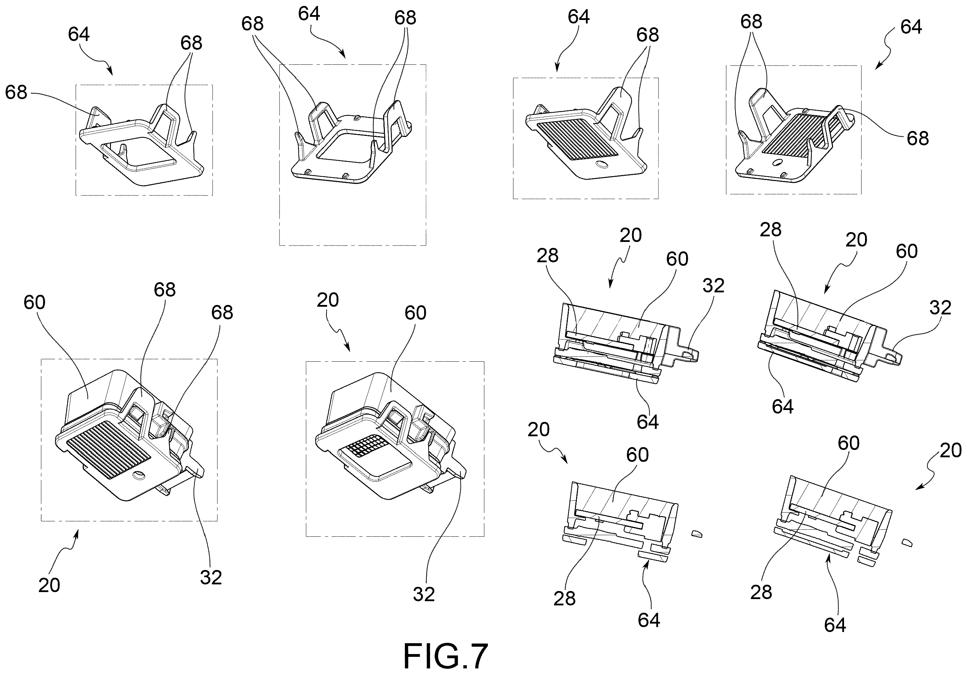

figures 4-7 show various diagrammatic perspective or section views of lighting modules of an illuminated grille according to possible embodiments of the present invention;

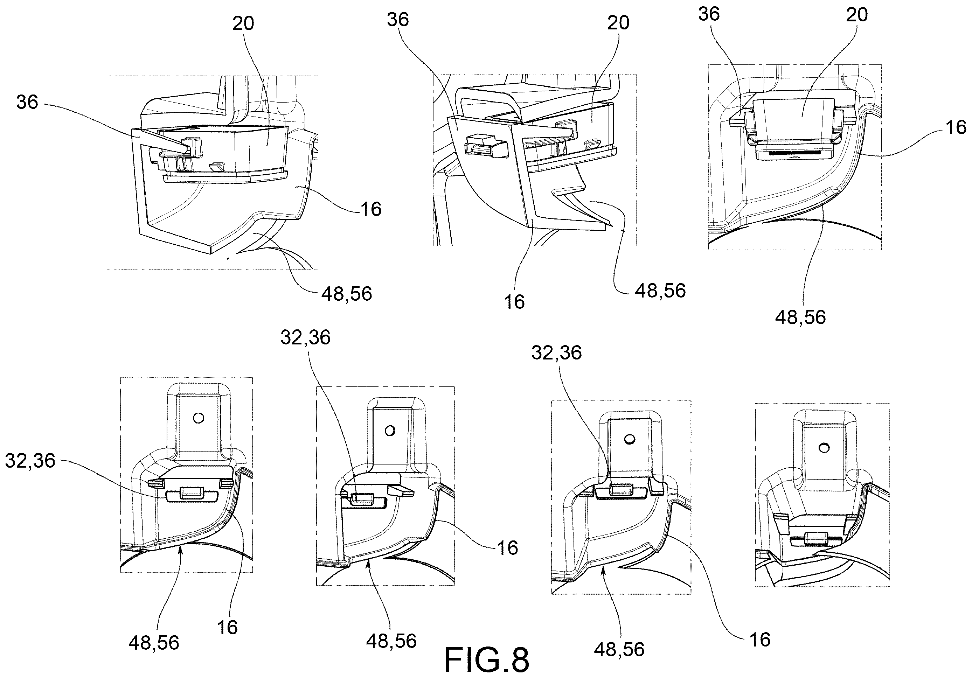

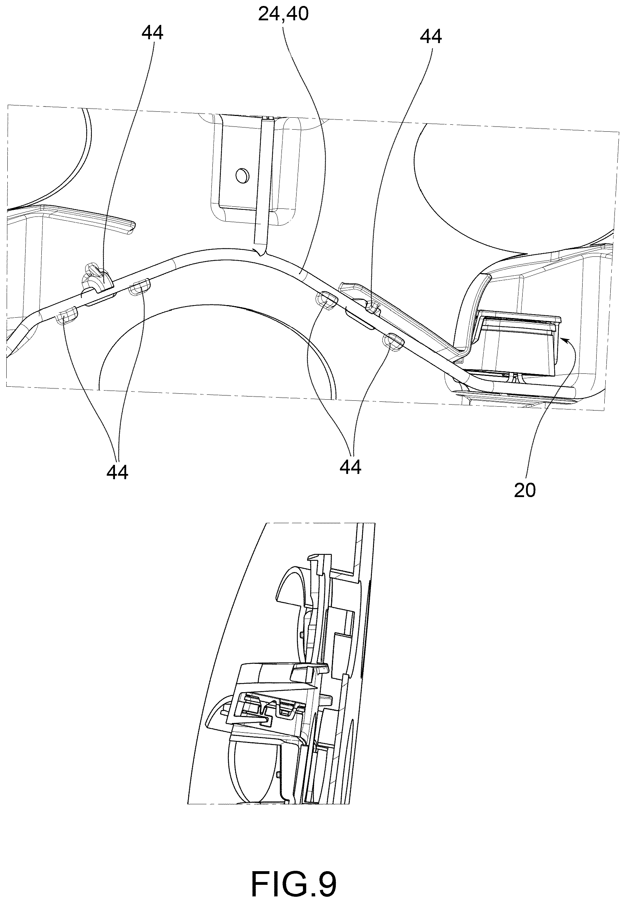

figures 8-9 show assembly details of the lighting modules on a grille body according to possible embodiments of the present invention;

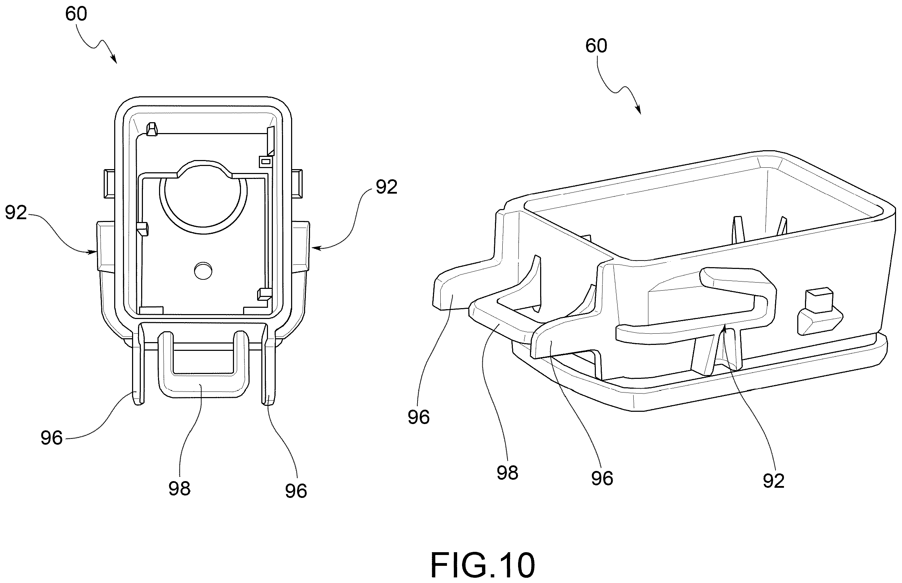

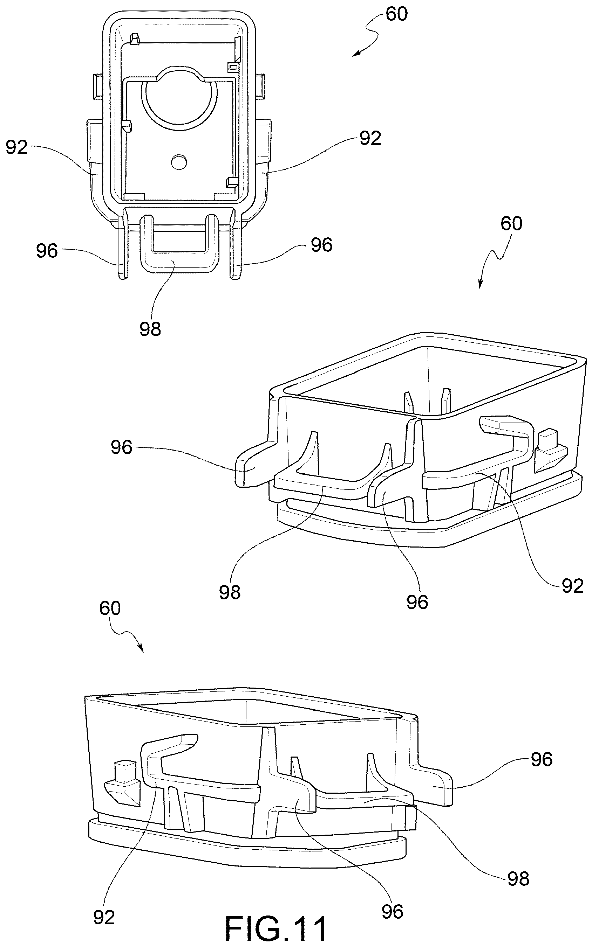

figures 10-11 show diagrammatic plan and perspective views, from different angles, of a lighting module casing according to embodiments of the present invention;
figures 12-14 show diagrammatic perspective and plan views of a snap insertion sequence of a lighting module on a peripheral grille body wall according to an embodiment of the present invention;
figure 15 shows a diagrammatic perspective view of a grille portion according to a constructional variant of the present invention;
figure 16 shows the enlarged detail XVI indicated in figure 15.

The elements or parts of elements common to the embodiments described below will be indicated by the same reference numerals.

### DETAILED DESCRIPTION

With reference to the aforesaid figures, reference numeral 4 indicates, as a whole, an overall diagrammatic view of an illuminated grille for vehicles.

For the purposes of the present invention, it does not show the type and/or position of the grille, which can commonly be at the front and outside, however it can also be positioned in other points of the vehicle, e.g., outside, at the back, or inside.

Moreover, for the purposes of the present invention, it does not show the type of vehicle, which can comprise motor vehicles, motorcycles, cycles, industrial vehicles of any size and any power or propulsion.

The illuminated grille 4 for vehicles comprises a grille body 8 provided with a plurality of windows 12 delimited by respective peripheral walls 16, which are interconnected so as to form a lattice.

At at least one window 12, the illuminated grille 4 comprises at least one lighting module 20.

Said lighting module 20 comprises power supply means 24, at least one light source 28, powered by said power supply means 24, coupling means 32 for removably fixing the lighting module 20 to a coupling portion 36 of the peripheral wall 16.

The power supply means 24 comprise at least one power cable 40 and a power source (not shown). The power cable 40 is preferably fixed to the grille body 8 by means of hooks 44, e.g., snap-on hooks, of the reversible type.

According to a possible embodiment, the power cables 40 are at least partially housed in conduits obtained on a rear wall of the grille body 8.

The coupling portion 36 can be made in one piece with the peripheral wall 16 or it can be on the peripheral wall 16.

The coupling portion 36 preferably comprises a pair of cantilevered protuberances 100.

According to a possible embodiment, the coupling portion 36 comprises a pair of through holes 104.

According to a possible embodiment, the coupling portion 36 comprises a shelf 99 projecting in a cantilever manner from the side of said protuberances 100.

According to a possible embodiment, the coupling means 32 comprise two guide grooves 92 and two guide ribs 96 which make a reversible mechanical connection with the grille body 8, as will be described better below.

The guide grooves 92 are preferably 'U'-shaped so as to delimit a seat with a bilateral constraint for said protuberances.

According to an embodiment, the coupling means 32 also comprises a front clip 98. Said front clip 98, for example, has a through opening 99.

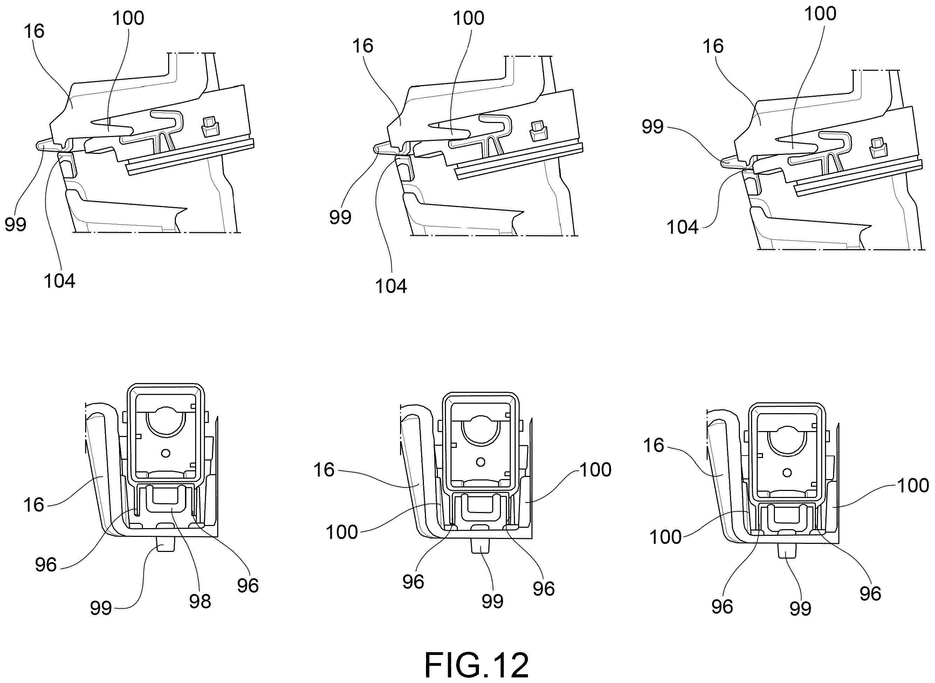

The coupling between the lighting module 20 and the peripheral wall 16 will now be described, with particular reference to the sequence illustrated in figures 12-14.

In particular, it starts with the alignment between the guide grooves 92 of the lighting module 20 and the protuberances 100 of the peripheral wall 16 (figure 12).

Continuing the step of insertion, the protuberances 100 are inserted in the guide grooves 92.

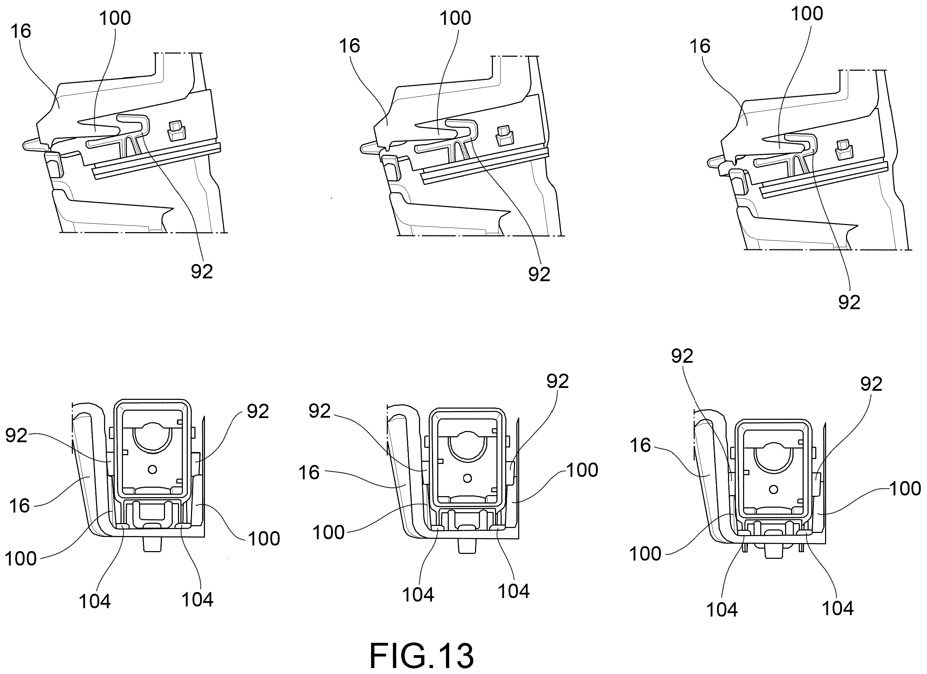

Moreover (figure 13), the guide ribs 96 at least partially pass through the through holes 104 of the peripheral wall 16.

The insertion of the guide ribs 96 through the through holes 104 of the peripheral wall 16 is a further locking and security in the fixing of the lighting module 20.

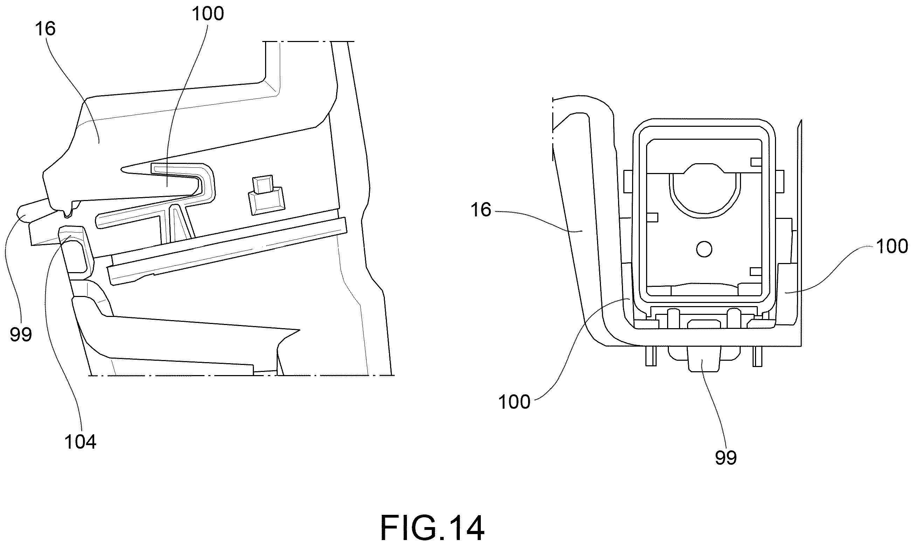

Finally (figure 14), when the protuberances 100 are all the way down inside the guide grooves 92, the front clip 98 at least partially engages the shelf 99.

The peripheral wall 16 comprises at least one light beam-permeable portion 48, positioned facing said light source 28 so as to be crossed, at least partially, by the light beam produced by the light source 18.

In particular, after crossing the light beam-permeable portion 48, said light beam 48 impacts on a lighting portion 52 of the peripheral wall 16, facing said light source 28 and said light beam-permeable portion 48.

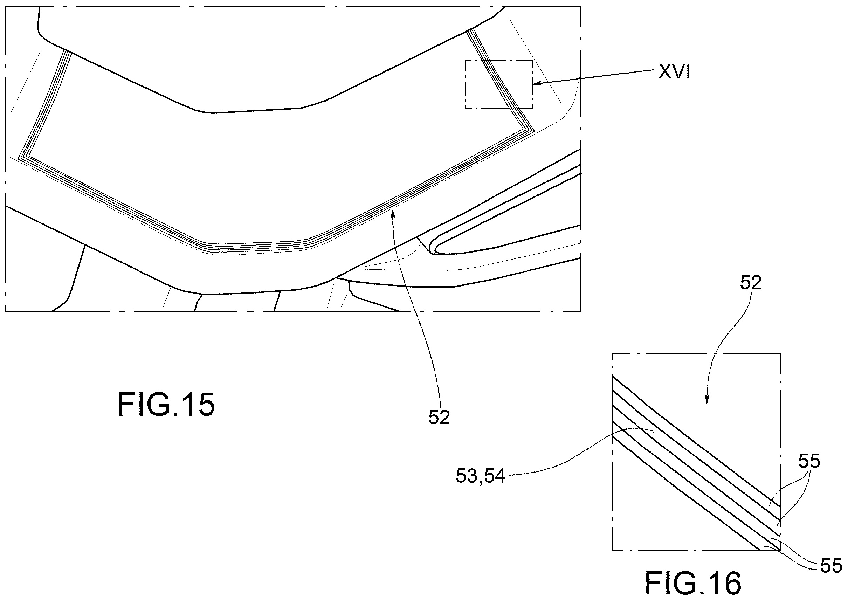

In the example in figures 15-16, the lighting portion 52 can be provided with an embossing, or a satin finish, or a similar surface treatment 53, in which different types of patterns can be formed to obtain a shaded effect. For example, a central part of the lighting portion 52 can have a greater roughness than the peripheral parts of the same lighting portion 52. Thus, the shaded effect can be obtained with a grain, which becomes increasingly "finer" gradually moving from the center to the periphery of the lighting portion 52.

Moreover, in combination with the embossing, or irrespective thereof, the lighting portion 52 can include grooves or regular ridges, for example, such as those typical of technically defined cylindrical optics, to obtain an even more refined aesthetic appearance, or simply to obtain a different style. As an alternative to, or in combination with the grooves, or ridges, convex or concave lenticular structures can be provided, on the lighting portion 52, e.g., with a polygonal base, such as those typical of optics technically defined as pillow optics.

In a further possible constructional variant, not shown, the lighting portion 52 can include a reflecting colored or metallic coating 54. Said coating 54 can be obtained by means of a sequence of mutually overlapping layers 55.

The lighting portion 52 can be made in one piece with the peripheral wall 16 or it can be on the peripheral wall 16.

According to a possible embodiment, the light beam-permeable portion 48 is opposite to said coupling portion 36.

The light beam-permeable portion 48 can have various shapes: for example, it can comprise an undercut 56 or generally a hole or slot.

According to a possible embodiment, a peripheral edge of said undercut 56 is shaped in such a way as to delimit and shape the light beam incident therein.

Said at least one lighting module 20 can have various configurations and dimensions: for example, the lighting module 20 comprises a casing 60 which houses the light source 28 and a screen 64 which covers the casing 60 and intercepts the light beam produced by said light source 28.

Said screen 64 is preferably removably connected to the casing 60, by reversible connection means, such as snap-on tongues 68, for example.

The grille body 8 can have various configurations and dimensions.

The grille body 8 comprises an internal lattice structure 72, onto which the power supply means 24 and the lighting module 20 are fixed, and an outer cover 76 which covers the internal lattice structure 72.

The outer cover 76 is provided with openings 80 at the windows 12 which are delimited by the internal lattice structure 72.

Therefore, in the assembly configuration, said outer cover 76 at least partially delimits the peripheral wall 16 of the windows 12.

According to a possible embodiment, the outer cover 76 comprises, on an inner side facing the internal lattice structure 72, a plurality of shelves 84 projecting towards the internal lattice structure 72 so as to obtain said lighting portions 52.

In other words, the shelves 84 face the light source 28 and the light beam-permeable portion 48, so as to receive the light beam crossing said light beam-permeable portion 48.

Obviously, the light sources 28, the windows 12 and the lighting portions can have any spatial arrangement.

Moreover, it is also possible to provide an overtime-dynamic power supply of the various light sources 28 provided on the grille body 8, so as to create animation effects.

As can be appreciated from the description above, the present invention allows overcoming the drawbacks presented in the prior art.

In particular, the present invention overcomes the problem of customizing the illuminated grille for vehicles.

In fact, it is possible to manufacture an illuminated grille having any light pattern, both of the fixed type and of the varying type (animation). More specifically, each lighting module can arbitrarily be oriented towards a respective lighting portion of the peripheral wall, thus generating, in use, the formation of imaginative decorative light patterns on the illuminated grille which can be controlled by a control unit, not shown, according to a well-established animation sequence.

Moreover, the solution is particularly cost-effective to manufacture.

Moreover, the solution allows keeping the dimensions of the grille highly compact, ensuring the passage of air and the heat exchange with the radiator located behind the grille. At the same time, the grille allows concealing the cables and light sources from the sight of outside observers.

Moreover, the cables are neatly arranged at least partially inside the grille structure, unlike the solutions of the prior art.

Moreover, the fixing of the lighting modules onto the peripheral wall is particularly stable and safe even when the vehicle is moving, despite the considerable mechanical stresses and vibrations to which the grille is subjected.

In order to meet specific contingent needs, those skilled in the art may make several changes and variations to the solutions described above.

The scope of protection of the invention is defined by the following claims.

### List of reference numerals

- 4:: illuminated grille
- 8:: grille body
- 12:: window
- 16:: peripheral wall
- 20:: lighting module
- 24:: power supply means
- 28:: light source
- 32:: coupling means
- 36:: coupling portion
- 40:: power cable
- 44:: hooks
- 48:: permeable light beam portion
- 52:: lighting portion
- 53:: surface treatment
- 54:: coating
- 55:: layers
- 56:: undercut
- 60:: casing
- 64:: screen
- 68:: snap-on tongue
- 72:: internal lattice structure
- 76:: outer cover
- 80:: openings
- 84:: shelf
- 92:: guide groove
- 96:: guide rib
- 98:: front clip
- 99:: shelf
- 100:: protuberances
- 104:: through holes

## Claims

1. An illuminated grille (4) for vehicles, comprising
- a grille body (8) provided with a plurality of windows (12) delimited by respective peripheral walls (16) interconnected so as to form a lattice,
- wherein at at least one window (12), the grille body (8) comprises at least one lighting module (20),
- said lighting module (20) comprising power supply means (24), at least one light source (28), powered by said power supply means (24), coupling means (32) for fixing the lighting module (20) to a coupling portion (36) of the peripheral wall (16),
- said coupling means (32) orienting said lighting module (20), so that a lighting portion (52) of the peripheral wall (16) faces said at least one light source (28) of the lighting module, to be crossed by a light beam emitted by said at least one light source (28),
**characterized in that**
said grille body (8) comprises an internal lattice structure (72) onto which the power supply means (24) and the lighting module (20) are fixed, and an outer cover (76) which covers the internal lattice structure (72), said outer cover (76) being provided with openings (80) at the windows (12) delimited by the internal lattice structure (72).

2. An illuminated grille (4) for vehicles according to claim 1, wherein the peripheral wall (16) comprises at least one light beam-permeable portion (48), positioned facing said at least one lighting source (28) so as to be crossed, at least partially, by the light beam produced by the at least one light source (28), said light beam impacting said lighting portion (52) of the peripheral wall (16), facing said at least one light source (28) and said light beam-permeable portion (48).

3. An illuminated grille (4) for vehicles according to claim 2, wherein said light beam-permeable portion (48) is opposite to said coupling portion (36).

4. An illuminated grille (4) for vehicles according to claim 2 or 3, wherein said light beam-permeable portion (48) comprises an undercut and/or a hole and/or a slot.

5. An illuminated grille (4) for vehicles according to claim 4, wherein a peripheral edge of said undercut (56) and/or a hole and/or a slot is shaped to delimit and shape the light beam incident therein.

6. An illuminated grille (4) for vehicles according to claim 1, 2, 3, 4 or 5, wherein the power supply means (24) comprise power cables (40) at least partially housed in conduits obtained on a rear wall of the grille body (8).

7. An illuminated grille (4) for vehicles according to any one of claims 1 to 6, wherein the coupling means (32) are configured to make a reversible mechanical connection with the coupling portion (36) of the peripheral wall (16) of the grille body (8).

8. An illuminated grille (4) for vehicles according to claim 7, wherein the coupling portion (36) comprises a pair of cantilevered protuberances (100), projecting towards the coupling means (32).

9. An illuminated grille (4) for vehicles according to claim 8, wherein the coupling means (32) comprise two guide grooves (92) configured to make a guide and shape coupling with said protuberances (100).

10. An illuminated grille (4) for vehicles according to claim 9, wherein the guide grooves (92) are 'U' shaped so as to delimit a seat with a bilateral constraint for said protuberances (100).

11. An illuminated grille (4) for vehicles according to any one of claims 7 to 10, wherein the coupling portion (36) of the peripheral wall (16) comprises a pair of through holes (104).

12. An illuminated grille (4) for vehicles according to claim 11, wherein the coupling means (32) comprise two guide ribs (96) configured to make a reversible mechanical connection with said through holes(104) of the peripheral wall (16).

13. An illuminated grille (4) for vehicles according to any one of claims 7 to 12, wherein the coupling portion (36) comprises a shelf (99) projecting in a cantilever manner towards the associable lighting module (20).

14. An illuminated grille (4) for vehicles according to claim 13, wherein the coupling means (32) also comprise a front clip (98) provided with a through opening (99), adapted to make a shape coupling with said shelf (99).

15. An illuminated grille (4) according to any one of claims 1 to 14, wherein said at least one lighting module (20) comprises a casing (60) which houses the light source (28) and a screen (64) which covers the casing (60) and intercepts the light beam produced by said light source (28).

16. An illuminated grille (4) for vehicles according to claim 15, wherein said screen (64) is removably connected to the casing (60), by reversible connection means, such as snap-on tongues (68).

17. An illuminated grille (4) for vehicles according to any one of claims 1 to 16, wherein in the assembly configuration, said outer cover (76) delimits, at least partially, the peripheral wall (16) of the windows (12).

18. An illuminated grille (4) for vehicles according to any one of claims 1 to 17, wherein the outer cover (76) comprises, on an inner side facing the internal lattice structure (72), a plurality of shelves (84) projecting towards the internal lattice structure (72), so as to obtain said lighting portions (52).

19. An illuminated grille (4) for vehicles according to any one of claims 1 to 18, wherein said coupling means (32) are configured to removably fix the lighting module (20) to said coupling portion (36) of the peripheral wall (16).

20. An illuminated grille (4) for vehicles according to any one of claims 1 to 19, wherein the lighting portion (52) is provided with an embossing, or a satin finish, or a similar surface treatment (53), which is uniform or varies along the extension of the lighting portion (52).

21. A vehicle comprising an illuminated grille according to any one of claims 1 to 20.

## Patentansprüche

1. Beleuchtetes Gitter (4) für Fahrzeuge, umfassend
- einen Gitterkörper (8), der mit einer Mehrzahl von Fenstern (12) versehen ist, die durch jeweilige umlaufende Wände (16) begrenzt werden, die miteinander verbunden sind, um ein Gitter zu bilden,
- wobei der Gitterkörper (8) an mindestens einem Fenster (12) mindestens ein Beleuchtungsmodul (20) umfasst,
- das Beleuchtungsmodul (20) umfassend Energieversorgungsmittel (24), mindestens eine Lichtquelle (28), die durch die Energieversorgungsmittel (24) versorgt wird, Kopplungsmittel (32) zum Befestigen des Beleuchtungsmoduls (20) an einem Kopplungsabschnitt (36) der umlaufenden Wand (16),
- die Kopplungsmittel (32), die das Beleuchtungsmodul (20) ausrichten, sodass ein Beleuchtungsabschnitt (52) der umlaufenden Wand (16) der mindestens einer Lichtquelle (28) des Beleuchtungsmoduls zugewandt ist, um von einem Lichtstrahl gekreuzt zu werden, der von der mindestens eine Lichtquelle (28) emittiert wird,
**dadurch gekennzeichnet, dass**
der Gitterkörper (8) eine interne Gitterstruktur (72) umfasst, auf der die Energieversorgungsmittel (24) und das Beleuchtungsmodul (20) befestigt werden, sowie eine äußere Abdeckung (76) die die interne Gitterstruktur (72) bedeckt, wobei die äußere Abdeckung (76) mit Öffnungen (80) an den Fenstern (12) versehen ist, die durch die interne Gitterstruktur (72) begrenzt werden.

2. Beleuchtetes Gitter (4) für Fahrzeuge nach Anspruch 1, wobei die umlaufende Wand (16) mindestens einen lichtstrahldurchlässigen Abschnitt (48) umfasst, der angeordnet ist, um mindestens einer Lichtquelle (28) zugewandt zu sein, um mindestens teilweise von dem Lichtstrahl gekreuzt zu werden, der von der mindestens einen Lichtquelle (28) erzeugt wird, wobei der Lichtstrahl auf den Beleuchtungsabschnitt (52) der umlaufenden Wand (16) auftrifft, der mindestens einer Lichtquelle (28) und dem lichtstrahldurchlässigen Abschnitt (48) zugewandt ist.

3. Beleuchtetes Gitter (4) für Fahrzeuge nach Anspruch 2, wobei der lichtstrahldurchlässige Abschnitt (48) dem Kopplungsabschnitt (36) gegenüberliegt.

4. Beleuchtetes Gitter (4) für Fahrzeuge nach Anspruch 2 oder 3, wobei der lichtstrahldurchlässige Abschnitt (48) eine Hinterschneidung und/oder eine Bohrung und/oder einen Schlitz umfasst.

5. Beleuchtetes Gitter (4) für Fahrzeuge nach Anspruch 4, wobei ein umlaufender Rand der Hinterschneidung (56) und/oder eine Bohrung und/oder ein Schlitz ausgebildet ist, sodass er den darin einfallenden Lichtstrahl begrenzt und ausbildet.

6. Beleuchtetes Gitter (4) für Fahrzeuge nach Anspruch 1, 2, 3, 4 oder 5, wobei die Energieversorgungsmittel (24) Versorgungskabel (40) umfassen, die mindestens teilweise in Leitungen aufgenommen sind, die an einer Rückwand des Gitterkörpers (8) erhalten werden.

7. Beleuchtetes Gitter (4) für Fahrzeuge nach einem der Ansprüche 1 bis 6, wobei die Kopplungsmittel (32) dazu konfiguriert sind, eine reversible mechanische Verbindung mit dem Kopplungsabschnitt (36) der umlaufenden Wand (16) des Gitterkörpers (8) herzustellen.

8. Beleuchtetes Gitter (4) für Fahrzeuge nach Anspruch 7, wobei der Kopplungsabschnitt (36) ein Paar von auskragenden Vorsprüngen (100) umfasst, die zu den Kopplungsmitteln (32) vorstehen.

9. Beleuchtetes Gitter (4) für Fahrzeuge nach Anspruch 8, wobei die Kopplungsmittel (32) zwei Führungsnuten (92) umfassen, die dazu konfiguriert sind, einen Führungs- und Formschluss mit den Vorsprüngen (100) herzustellen.

10. Beleuchtetes Gitter (4) für Fahrzeuge nach Anspruch 9, wobei die Führungsnuten (92) U-förmig ausgebildet sind, um einen Sitz mit beidseitiger Befestigung für die Vorsprünge (100) zu begrenzen.

11. Beleuchtetes Gitter (4) für Fahrzeuge nach einem der Ansprüche 7 bis 10, wobei der Kopplungsabschnitt (36) der umlaufenden Wand (16) ein Paar von Durchgangsbohrungen (104) umfasst.

12. Beleuchtetes Gitter (4) für Fahrzeuge nach Anspruch 11, wobei die Kopplungsmittel (32) zwei Führungsrippen (96) umfassen, die dazu konfiguriert sind, eine reversible mechanische Verbindung mit den Durchgangsbohrungen (104) der umlaufenden Wand (16) herzustellen.

13. Beleuchtetes Gitter (4) für Fahrzeuge nach einem der Ansprüche 7 bis 12, wobei der Kopplungsabschnitt (36) ein Regal (99) umfasst, das auskragend in Richtung zu dem verknüpfbaren Beleuchtungsmodul (20) vorsteht.

14. Beleuchtetes Gitter (4) für Fahrzeuge nach Anspruch 13, wobei die Kopplungsmittel (32) ferner einen Frontclip (98) umfassen, der mit einer Durchgangsöffnung (99) versehen ist, die eingerichtet ist, einen Formschluss mit dem Regal (99) herzustellen.

15. Beleuchtetes Gitter (4) nach einem der Ansprüche 1 bis 14, wobei das mindestens eine Beleuchtungsmodul (20) ein Gehäuse (60) umfasst, das die Lichtquelle (28) aufnimmt, und einen Schirm (64), der das Gehäuse (60) bedeckt und den Lichtstrahl abfängt, der von der Lichtquelle (28) erzeugt wird.

16. Beleuchtetes Gitter (4) für Fahrzeuge nach Anspruch 15, wobei der Schirm (64) lösbar mit dem Gehäuse (60) mittels reversibler Verbindungsmittel, wie Schnappzungen (68) verbunden ist.

17. Beleuchtetes Gitter (4) für Fahrzeuge nach einem der Ansprüche 1 bis 16, wobei in der Montagekonfiguration die äußere Abdeckung (76) mindestens teilweise die umlaufende Wand (16) der Fenster (12) begrenzt.

18. Beleuchtetes Gitter (4) für Fahrzeuge nach einem der Ansprüche 1 bis 17, wobei die äußere Abdeckung (76) an einer inneren Seite, die der inneren Gitterstruktur (72) zugewandt ist, eine Mehrzahl von Regalen (84) umfasst, die zu der inneren Gitterstruktur (72) vorstehen, um die Beleuchtungsabschnitte (52) zu erhalten.

19. Beleuchtetes Gitter (4) für Fahrzeuge nach einem der Ansprüche 1 bis 18, wobei die Kopplungsmittel (32) dazu konfiguriert sind, das Beleuchtungsmodul (20) lösbar an dem Kopplungsabschnitt (36) der umlaufenden Wand (16) zu befestigen.

20. Beleuchtetes Gitter (4) für Fahrzeuge nach einem der Ansprüche 1 bis 19, wobei der Beleuchtungsabschnitt (52) mit einer Prägung oder einer satinierten Oberfläche oder einer ähnlichen Oberflächenbehandlung (53) versehen ist, die einheitlich ist oder entlang der Erstreckung des Beleuchtungsabschnitts (52) ändert.

21. Fahrzeug, umfassend ein beleuchtetes Gitter nach einem der Ansprüche 1 bis 20.

## Revendications

1. Une grille éclairée (4) pour véhicules, comprenant
un corps de grille (8) pourvu d'une pluralité de fenêtres (12) délimitées par des parois périphériques (16) respectives interconnectées de manière à former un treillis,
dans laquelle, à au moins une fenêtre (12), le corps de grille (8) comprend au moins un module d'éclairage (20),
ledit module d'éclairage (20) comprenant des moyens d'alimentation (24), au moins une source lumineuse (28), alimentée par lesdits moyens d'alimentation (24), des moyens d'accouplement (32) pour fixer le module d'éclairage (20) à une portion d'accouplement (36) de la paroi périphérique (16),
lesdits moyens d'accouplement (32) orientant ledit module d'éclairage (20), de sorte qu'une portion d'éclairage (52) de la paroi périphérique (16) est orientée vers ladite au moins une source lumineuse (28) du module d'éclairage, pour être traversée par un faisceau lumineux émis par ladite au moins une source lumineuse (28),
**caractérisée en ce que**
ledit corps de grille (8) comprend une structure de treillis interne (72) sur laquelle les moyens d'alimentation (24) et le module d'éclairage (20) sont fixés, et un couvercle externe (76) qui recouvre la structure de treillis interne (72), ledit couvercle externe (76) étant pourvu d'ouvertures (80) au niveau des fenêtres (12) délimitées par la structure de treillis interne (72).

2. Une grille éclairée (4) pour véhicules selon la revendication 1, dans laquelle la paroi périphérique (16) comprend au moins une portion perméable au faisceau lumineux (48), positionnée en regard de ladite au moins une source lumineuse (28) de sorte à être traversée, au moins partiellement, par le faisceau lumineux produit par ladite au moins une source lumineuse (28), ledit faisceau lumineux impactant ladite portion d'éclairage (52) de la paroi périphérique (16), orientée vers ladite au moins une source lumineuse (28) et ladite portion perméable au faisceau lumineux (48).

3. Une grille éclairée (4) pour véhicules selon la revendication 2, dans laquelle ladite portion perméable au faisceau lumineux (48) est opposée à ladite portion d'accouplement (36).

4. Une grille éclairée (4) pour véhicules selon la revendication 2 ou 3, dans laquelle ladite portion perméable au faisceau lumineux (48) comprend un contre-dépouille et/ou un trou et/ou une fente.

5. Une grille éclairée (4) pour véhicules selon la revendication 4, dans laquelle un bord périphérique dudit contre-dépouille (56) et/ou d'un trou et/ou d'une fente est façonné pour délimiter et façonner le faisceau lumineux incident dans celui-ci.

6. Une grille éclairée (4) pour véhicules selon la revendication 1, 2, 3, 4 ou 5, dans laquelle les moyens d'alimentation (24) comprennent des câbles d'alimentation (40) au moins partiellement logés dans des conduits obtenus sur une paroi arrière du corps de grille (8).

7. Une grille éclairée (4) pour véhicules selon l'une quelconque des revendications 1 à 6, dans laquelle les moyens d'accouplement (32) sont configurés pour réaliser une connexion mécanique réversible avec la portion d'accouplement (36) de la paroi périphérique (16) du corps de grille (8).

8. Une grille éclairée (4) pour véhicules selon la revendication 7, dans laquelle la portion d'accouplement (36) comprend une paire de protubérances en porte-à-faux (100), faisant saillie vers les moyens d'accouplement (32).

9. Une grille éclairée (4) pour véhicules selon la revendication 8, dans laquelle les moyens d'accouplement (32) comprennent deux rainures de guidage (92) configurées pour réaliser un accouplement de guidage et de forme avec lesdites protubérances (100).

10. Une grille éclairée (4) pour véhicules selon la revendication 9, dans laquelle les rainures de guidage (92) sont en forme de « U » de sorte à délimiter un logement avec une contrainte bilatérale pour lesdites protubérances (100).

11. Une grille éclairée (4) pour véhicules selon l'une quelconque des revendications 7 à 10, dans laquelle la portion d'accouplement (36) de la paroi périphérique (16) comprend une paire de trous traversants (104).

12. Une grille éclairée (4) pour véhicules selon la revendication 11, dans laquelle les moyens d'accouplement (32) comprennent deux nervures de guidage (96) configurées pour réaliser une connexion mécanique réversible avec lesdits trous traversants (104) de la paroi périphérique (16).

13. Une grille éclairée (4) pour véhicules selon l'une quelconque des revendications 7 à 12, dans laquelle la portion d'accouplement (36) comprend une étagère (99) faisant saillie en porte-à-faux vers le module d'éclairage associable (20).

14. Une grille éclairée (4) pour véhicules selon la revendication 13, dans laquelle les moyens d'accouplement (32) comprennent en outre un clip frontal (98) pourvu d'une ouverture traversante (99), adapté pour réaliser un accouplement de forme avec ladite étagère (99).

15. Une grille éclairée (4) selon l'une quelconque des revendications 1 à 14, dans laquelle ladite au moins une module d'éclairage (20) comprend un boîtier (60) qui loge la source lumineuse (28) et un écran (64) qui recouvre le boîtier (60) et intercepte le faisceau lumineux produit par ladite source lumineuse (28).

16. Une grille éclairée (4) pour véhicules selon la revendication 15, dans laquelle ledit écran (64) est relié de manière amovible au boîtier (60), par des moyens de connexion réversibles, tels que des languettes à encliquetage (68).

17. Une grille éclairée (4) pour véhicules selon l'une quelconque des revendications 1 à 16, dans laquelle, dans la configuration d'assemblage, ledit couvercle externe (76) délimite, au moins partiellement, la paroi périphérique (16) des fenêtres (12).

18. Une grille éclairée (4) pour véhicules selon l'une quelconque des revendications 1 à 17, dans laquelle le couvercle externe (76) comprend, sur un côté interne orienté vers la structure de treillis interne (72), une pluralité d'étagères (84) faisant saillie vers la structure de treillis interne (72), de sorte à obtenir lesdites portions d'éclairage (52).

19. Une grille éclairée (4) pour véhicules selon l'une quelconque des revendications 1 à 18, dans laquelle lesdits moyens d'accouplement (32) sont configurés pour fixer de manière amovible le module d'éclairage (20) à ladite portion d'accouplement (36) de la paroi périphérique (16).

20. Une grille éclairée (4) pour véhicules selon l'une quelconque des revendications 1 à 19, dans laquelle la portion d'éclairage (52) est pourvue d'un gaufrage, ou d'une finition satinée, ou d'un traitement de surface similaire (53), qui est uniforme ou varie le long de l'extension de la portion d'éclairage (52).

21. Un véhicule comprenant une grille éclairée selon l'une quelconque des revendications 1 à 20.
